# EUROPÄISCHE PATENTSCHRIFT

(11) **EP 2 428 448 B1**
(45) Veröffentlichungstag und Bekanntmachung des Hinweises auf die Patenterteilung: **20.03.2013**
(21) Anmeldenummer: 11008622.0
(22) Anmeldetag: 10.09.2008
(51) Int. Cl.: B64D 41/00

(54) **Verfahren zum Bereitstellen von Energie und Energieversorgungseinheit dafür**
Method for providing energy and energy supply unit
Procédé d'alimentation en énergie électrique et unité d'alimentation

(30) Priorität: 02.10.2007 DE 102007047260; 14.11.2007 DE 102007054291
(43) Veröffentlichungstag der Anmeldung: 14.03.2012
(62) Teilanmeldung aus: 08801958.3
(73) Patentinhaber: Diehl Aerospace GmbH, 88662 Überlingen (DE)
(72) Erfinder: Knepple, Ronny, 88662 Überlingen (DE); Petersen, Benno, 88634 Herdwangen (DE); Speth, Bernd, 88662 Überlingen (DE)
(74) Vertreter: Diehl Patentabteilung

(56) Entgegenhaltungen:
- EP-A2- 0 957 026
- WO-A2-2006/058774
- DE-A1-102005 010 399

## Beschreibung

Die Erfindung betrifft ein Verfahren zur Notstromversorgung in einem Verkehrsflugzeug.

Aus der DE 10 2005 054 883 A1 sind Energieversorgungseinheiten mit Brennstoffzellen beschrieben. Die dienen dort zum Nachladen von Strom- und Wasserspeichern in verfahrbaren Getränkeautomaten für Einsatz in der Kabine eines Passagierflugzeuges. Im Zuge des Nachladens des elektrischen Akkumulators im Getränkeautomaten für dessen Betrieb wird auch das in der Brennstoffzelle als Reaktionsprodukt angefallene heiße Wasser zum Auflösen bzw. Aufbrühen von Getränken in den Gretränkeautomaten umgefüllt. Mehrere solcher Energieversorgungseinheiten sind in verschiedenen Bereichen des Flugzeugs, insbesondere bei den vorderen und hinteren Bordküchen und im Mittenbereich der Passagierkabine, installiert, um dort im Verlaufe der Bewirtung der Passagiere zum Nachladen der Gertränkeautomaten angefahren zu werden. Problematisch da sehr arbeitsaufwendig und vor allem hinsichtlich des flüssigen Wasserstoffes sicherheitskritisch ist allerdings das Nachliefern der Brennstoffe für die über die Kabine verteilt installierten Brennstoffzellen selbst. Das muss nach dem Landen der Maschine parallel zur Kabinenreinigung durch darauf spezialisiertes Fachpersonal erfolgen. Wohl auch daran scheitert bisher der tatsächliche Einsatz von Brennstoffzellen im Luftverkehr.

Aus der DE 10 2005 010 399 A1 ist ein durchaus verbesserungswürdiges Verfahren zur Energie-Notversorgung in einem Luftfahrzeug bekannt, wobei zur Erzeugung von elektrischer Energie eine Brennstoffzelle verwendet wird.

In Erkenntnis dieser Gegebenheiten liegt vorliegender Erfindung die technische Problemstellung zugrunde, ein verbessertes Verfahren zur Notstromversorgung in einem Verkehrsflugzeug bereitzustellen.

Diese Aufgabe ist durch die im Hauptanspruch angegebenen wesentlichen Merkmale gelöst. Ausgestaltungen ergeben sich aus den Unteransprüchen.

Das Verfahren umfasst die folgenden Schritte:
a) Anschließen zumindest einer austauschbaren Energieversorgungseinheit in Form eines Gepäck-Containers oder eines Bordküchen-Trolleys über eine Andock-Schnittstelle (8) an das lokale Verbrauchernetz;
b) Inbetriebnahme der Energieversorgungseinheit; und
c) bedarfsweises Aufschalten der in Betrieb befindlichen Energieversorgungseinheit auf das Notstromnetz.

Die Energieversorgungseinheit mit ihrem hier sog. Generator, nämlich einem Akkumulator oder vorzugsweise einer Brennstoffzelle samt den Tanks für deren Brennstoffe, ist nicht mehr fest in der Kabine installiert, sondern modulartig energieautark und komplett funktionstüchtig als austauschbare Einheit verfahrbar ausgelegt; nämlich eingebaut in ein Behältnis in Form eines der genormten Küchenwagen (Trolleys) für die Bordküche (die sog. Galley) oder in Form der für unterschiedliche Flugzeugmodelle standardisierten Gepäck- und Cargo-Container zur Aufnahme im Frachtraum eines Flugzeugs. Wie jene verfahrbaren Behälter werden diese Energieversorgungseinheiten nach der Landung einfach aus ihrer Arretierung in ihrer Aufnahmebucht gelöst und nach draußen verbracht. Benutzte derartige Energieversorgungseinheiten können dann extern gesammelt und in einem - insbesondere für Handhabung von Wasserstoff zum Betrieb von Brennstoffzellen geeigneten - Spezialbetrieb zeitentkoppelt nachgeladen werden. Währenddessen werden schon aufgefrischte Einheiten aus einem Vorrat zum Flugzeug angeliefert, wo sie mittels der herkömmlichen Handhabung von Trolleys bzw. Containern in die Küche bzw. in den Frachtraum an Bord des Flugzeugs verbracht werden. Mit dem Verriegeln der frischen Energieversorgungseinheit in ihrer Aufnahmeposition werden Andock-Schnittstellen der Energieversorgungseinheit an ein lokales Verbrauchernetz angeschlossen.

Die Lösung weist den besonderen Vorteil auf, die bestehende Infrastruktur, nämlich die Catering-Versorgungskette mit ihren hydraulischen Hubladern zum Ver- und Entsorgen der Bordküchen bzw. die verfahrbaren Rollbänder zum Be- und Entladen der Frachträume, auch für das Handling beim Austausch der Energieversorgungseinheiten einsetzen zu können. Deshalb muss keine zusätzliche Logistik mit ihren sicherheitsrelevanten Problemen des Rollfeldzuganges installiert werden.

Ein bestimmter der schmalen Speisetrolley-Andockbuchten in der Bordküche, bzw. ein bestimmter der Stauplätze im Frachtraum, ist für den Anschluss der standardisierten Energieversorgungseinheit ausgelegt und reserviert. Hier ist die örtliche elektrische Verkabelung beim Andocken unter Verrasten für die mobile Schnittstelle zugänglich, insbesondere zur Versorgung der elektrischen Verbraucher in der Bordküche bzw. an anderen, zum Minimieren des Verkabelungsaufwandes vorzugsweise an der Küche benachbarten, Orten in der Kabine. Diese Verbraucher werden dann, unter signifikanter Entlastung des an einen Triebwerksgenerator angeschlossenen Bordnetzes, aus der mobilen, autarken Energieversorgungseinheit gespeist.

Es kann vorgesehen sein, unter Ersatz einer normalen Notstromversorgung bedarfsweise Notstromverbraucher auf die austauschbare Energieversorgungseinheit aufzuschalten, dann zweckmäßigerweise unter Abschalten ihrer verzichtbaren Lasten. Der bis dahin reguläre Betrieb testiert die Einsatzbereitschaft dieser autarken Notstromversorgung, die also nicht erst hochgefahren werden muss, sondern unmittelbar zur Verfügung steht. Es gewährleistet eine besondere Redundanz, wenn im Notstromfall die an sich unabhängig von einander arbeitenden Energieversorgungseinheiten verschiedener Bordküchen und / oder Cargo-Container auf das Notstromnetz zusammengeschaltet werden.

Insbesondere auf Langstreckenflügen kann ein Vorrat an betriebsfertig bestückten solchen Energieversorgungseinheiten, etwa bis zum Austausch gegen eine verbrauchte Einheit mittels eines internen Lifts Platz sparend über oder unter der Bordküche verstaut, oder anstatt der ersten Sitzreihe hinter der Bordküche, mitgeführt werden.

Am Zielflughafen bzw. anlässlich Zwischenlandungen bei Langstreckenflügen werden im Zuge des Austausches der Bordküchen-Trolleys bzw. des Entladens von Gepäck- oder Fracht-Containern auch die denselben Handhabungsstandard aufweisenden Energieversorgungseinheiten gegen solche mit frisch aufgeladenen Generatoren (Brennstoffzellen bzw. Akkumulatoren) ausgetauscht.

Ein abseits des Betankens des Flugzeuges erfolgendes, zentrales Nachladen der nach dem Landen aus dem Flugzeug entnommenen mobilen Energieversorgungseinheiten, also örtlich und zeitlich getrennt von der üblichen Flugzeugwartung und dadurch gleichermaßen sicherheits- wie kostenoptimierbar, gewährleistet höchste Sicherheit und bedarf weniger Fachpersonals, als eine dezentrale Gerätebetreuung in jedem der gerade gelandeten Flugzeuge.

Insoweit die Versorgung von Verbrauchern aus der austauschbaren Energieversorgungseinheit im Interesse kurzer Verkabelungen auf die unmittelbare Umgebung der Andockstation, in welcher der erfindungsgemäße Energie-Trolley wie ein sonstiger Küchenwagen mittels Knebeln gesichert ist, beschränkt ist, eröffnet die erfindungsgemäße Lösung auch größere Freizügigkeit bei der Umgestaltung großer Passagierkabinen insbesondere hinsichtlich des Ortes der mittleren Bordküche. Weil die Bordküche mit der austauschbaren Energieversorgungseinheit im Wesentlichen autark arbeitet, sind nur noch geringe Eingriffe in die Bordverkabelung erforderlich, wenn eine solche Küche im Zuge einer der häufig auftretenden Umkonfigurierungen, etwa zur vorübergehenden Vergrößerung eines bestimmten Kabinenbereiches um einige Sitzreihen, versetzt werden soll. Die Einzelplatzbeleuchtung wird zweckmäßigerweise aus den auswechselbaren Energieversorgungseinheiten in den stationären vorderen und hinteren Bordküchen mit versorgt, um Eingriffe in die Verkabelung aufgrund Verschiebung der mittleren Bordküche zu minimieren; deren Energieversorgungseinheit speist dann im wesentlichen nur die eigenen Verbraucher dieser Bordküche, und eventuell Sitzplatzkomforteinrichtungen in der unmittelbaren Umgebung.

Im Falle des Einsatzes von Brennstoffzellen-Generatoren kann im Zuge des Nachladens von kryogenen Flüssigkeitstanks mit deren Brennstoff zugleich das gegebenenfalls in der Energieversorgungseinheit zwischengespeicherte Reaktionswasser entsorgt werden - wenn es nicht zuvor, noch vor der Entnahme der Energieversorgungseinheit aus dem Flugzeugrumpf, in einen Kabinentank umgepumpt wurde, um als zusätzliches Brauchwasser für den Waschraum oder nach Aufbereitung für die Speisezubereitung zur Verfügung zu stehen.

Es kann auch ein individuelles Optimieren von nicht mehr über das Bordnetz erfolgender Energieversorgung erreichtt werden. So kann das Nachladen der Energieversorgungseinheit für Kurzstreckenflüge mit kleineren oder weniger gefüllten Brennstofftanks für eine Brennstoffzelle bzw. mit weniger Akkuzellen erfolgen, weil keine gewärmten Mahlzeiten angeboten werden müssen, wobei die damit einhergehende Gewichtsverringerung den Flugtreibstoffbedarf reduziert.

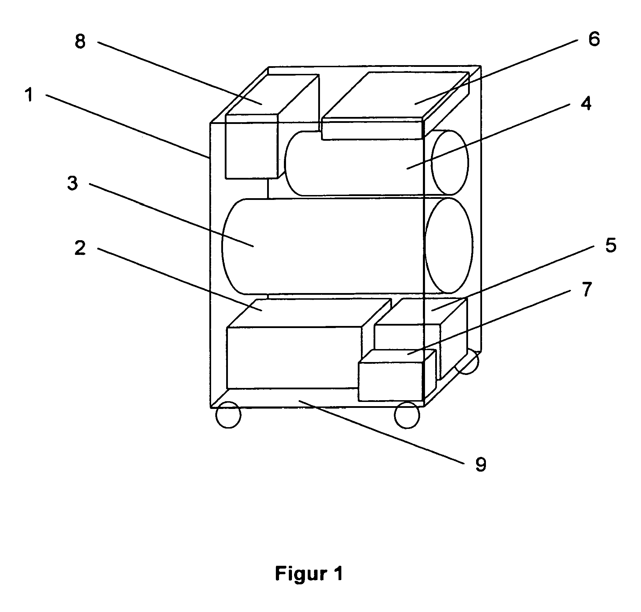

Zu näherer Veranschaulichung ist in der einzigen Figur der Zeichnung eine erfindungsgemäß ausgelegte mobile, austauschbare Energieversorgungseinheit als Rollwagen der standardisierten Abmessungen eines Bordküchenwagens (Galley Carts) für die Küchen-Dockingstationen (Aufnahmebuchten) in der bevorzugten Ausstattung mit einem Brennstoffzellen-Generator auf das Funktionswesentliche vereinfacht unmaßstäblich skizziert.

Ein verfahrbarer Container, hier bezeichnet als Trolley 1, ist - wie ein üblicher Bordküchen-Rollwagen mit Speisevorräten oder mit nach dem Flug zu entsorgendem Abfall - zur Aufnahme in einer der schmalen Buchten in der Bordküche ausgelegt, nun aber mit einem Brennstoffzellensystem aus wenigstens einer Brennstoff- oder Generator-Zelle 2 und mit Tanks für deren Brennstoffvorräte bestückt. Letztere weisen insbesondere einen Flüssigwasserstoff-Tank 3 und einen dagegen kleinervolumigen Flüssigsauerstoff-Tank 4 auf. Die von der Zelle 2 gelieferte elektrische Energie wird in einem Wandler 5 auf Nennspannung umgesetzt.

Energie für den Anlauf und das Abschalten der Zelle 2 sowie für den Betrieb einer Regelungs- und Überwachungseinheit 6, die vor allem der Funktionssicherung des Brennstoffzellensystems dient, ist in einem im Zuge des Nachfüllens von Brennstoff nachladbaren oder austauschbaren elektrischen Speicher 7 vorgehalten.

Die von der Zelle 2 generierte elektrische Energie wird unter Einfluss der Regelungs- und Überwachungseinheit 6 über eine Andock-Schnittstelle 8 in das Verbrauchernetz in der Umgebung der den Trolley 1 austauschbar aufnehmenden Docking-Station eingespeist. Die Schnittstelle 8 enthält nicht nur elektrische Ausgänge, wie insbesondere für 115 Volt Wechselspannung und 28 Volt Gleichspannung, sondern auch einen Wasserzulauf und Übergaben für die in der Brennstoffzelle 2 anfallende thermische Energie etwa in Form von Heißwasser und Wasserdampf. Die Anschlüsse erfolgen durch Verrasten im Zuge des Einschiebens und Verriegelns des Trolley 1 in seiner Aufnahmebucht (Docking-Station).

Über einen in der Skizze nur symbolisch angedeuteten Dienstbereich 9 des Trolley 1 sind verfahrenstechnische Komponenten für den Betrieb der Zelle 2 verteilt, wie Sensoren, Ventile und Wärmetauscher.

Bei den aus solcher austauschbarer, autarker Energieversorgungseinheit gespeisten Verbrauchern handelt es sich im Falle eines als Küchen-Container ausgelegten Trolley 1 vor allem um die Heiz- und Kühlaggregate für die in der Bordküche vorgehaltenen Speisen und Getränke sowie um die Küchenbeleuchtung.

Im Falle der Bestückung eines standardisierten Gepäck- oder Cargo-Containers mit einem, dann entsprechend größer auslegbaren, solchen Brennstoffzellensystem werden daraus zur Entlastung des Bordnetzes jedenfalls Heiz- und Kühlaggregate in anderen im Frachtraum an dessen Netz angeschlossenen Containern versorgt, und ferner nicht nur Verbraucher in der Bordküche, sondern vorzugsweise auch Verbraucher der Kabinenausstattung, die nach der Landung, also während des Austausches der Energieversorgungseinheit, gar nicht oder jedenfalls nicht unbedingt betrieben werden müssen, wie Stellmotore für Sitz- und Lüftungs-Komforteinrichtungen oder Steckdosen für Notebooks und andere Arbeits- oder Unterhaltungsgeräte.

Grundsätzlich kann im Rahmen vorliegender Erfindung die austauschbare Energieversorgungseinheit statt mit einem Brennstoffzellen-Generator auch mit einer Packung der neuen leistungsfähigeren Akkumulatoren bestückt sein, die allerdings derzeit noch ein größeres Gewicht als eine funktionstüchtig beschickte Brennstoffzelle erbringen. Jedenfalls wird das Bordnetz von Verkehrsflugzeugen von einem ganz wesentlichen Verbraucher, nämlich der Bordküche mit ihren Heiz- und Kühlaggregaten, entlastet, wenn wenigstens eine autarke, problemlos handhabbare Energieversorgungseinrichtung, vorzugsweise mit einer Brennstoffzelle samt ihren Brennstofftanks und Spannungswandlern bestückt, in einem Küchenwagen standardisierter Abmessungen eingebaut ist, um im Zuge der Küchen-Ver- und -Entsorgung mittels Catering-Hubladern gleich mit ausgetauscht zu werden. Stattdessen oder zusätzlich kann eine solche autarke, mobile Energieversorgungseinheit auch in einen der standardisierten Gepäck- oder Cargo-Container zur Aufnahme im Frachtraum der Maschine installiert sein und dann insbesondere auch elektrische Heiz- und Kühlaggregate in anderen Containern speisen.

Für eine mit Redundanz ausgestattete Notstromversorgung können mehrere derartig vorgehaltene Energieversorgungseinrichtungen zusammengeschaltet betrieben werden.

## Patentansprüche

1. Verfahren zur Notstromversorgung in einem Verkehrsflugzeug mit einem Bordnetz und mit zumindest einem lokalen Verbrauchernetz und einem Notstromnetz, umfassend die folgenden Schritte:
a) Anschließen zumindest einer austauschbaren Energieversorgungseinheit in Form eines Gepäck-Containers oder eines Bordküchen-Trolleys über eine Andock-Schnittstelle (8) an das lokale Verbrauchernetz;
b) Inbetriebnahme der Energieversorgungseinheit; und
c) bedarfsweises Aufschalten der in Betrieb befindlichen Energieversorgungseinheit auf das Notstromnetz.

2. Verfahren nach Anspruch 1, wobei beim Schritt lit. c verzichtbare Lasten abgeschaltet werden.

3. Verfahren nach einem der vorhergehenden Ansprüche, wobei beim Schritt lit. c die Energieversorgungseinheit mit wenigstens einer weiteren solchen Energieversorgungseinheit zusammengeschaltet betrieben wird.

4. Verfahren nach einem der vorhergehenden Ansprüche, wobei die Energieversorgungseinheit eine Brennstoffzelle samt ihren Brennstoffvorräten und Betriebseinrichtungen umfasst.

5. Verfahren nach einem der vorhergehenden Ansprüche, wobei die Energieversorgungseinrichtung mit Tanks (3, 4) für flüssigen Wasserstoff und flüssigen Sauerstoff zum Betrieb der Brennstoffzelle (2) ausgestattet ist.

6. Verfahren nach einem der vorhergehenden Ansprüche, wobei die Energieversorgungseinheit mit einem Speicher (7) und mit einer Regelungs- und Überwachungseinheit (6) sowie mit anlagentechnischen Komponenten (9) für autarken Betrieb ihrer Brennstoffzelle (2) ausgestattet ist.

7. Verfahren nach einem der vorhergehenden Ansprüche, wobei die Andock-Schnittstelle (8) elektrische Ausgänge für 115 Volt Wechselstrom und 24 Volt Gleichstrom umfasst.

8. Verfahren nach einem der vorhergehenden Ansprüche, wobei die Energieversorgungseinheit beim Schritt lit. b zur Versorgung elektrischer Verbraucher in der Bordküche in Betrieb genommen wird.

## Claims

1. Method for emergency power supply in a commercial aircraft having an on-board power supply system and having at least one local load network and an emergency power supply system, comprising the following steps:
a) connecting at least one exchangeable power supply unit in the form of a luggage container or a galley trolley to the local load network by means of a docking interface (8);
b) activating the power supply unit; and
c) connecting the operating power supply unit to the emergency power supply system as required.

2. Method according to Claim 1, wherein dispensable loads are disconnected in step c).

3. Method according to either of the preceding claims, wherein the power supply unit is operated with at least one further such power supply unit interconnected in step c).

4. Method according to one of the preceding claims, wherein the power supply unit comprises a fuel cell together with its fuel supplies and operating devices.

5. Method according to one of the preceding claims, wherein the power supply device is equipped with tanks (3, 4) for liquid hydrogen and liquid oxygen for operating the fuel cell (2).

6. Method according to one of the preceding claims, wherein the power supply unit is equipped with a storage means (7) and with a control and monitoring unit (6) and with system components (9) for autonomous operation of its fuel cell (2).

7. Method according to one of the preceding claims, wherein the docking interface (8) comprises electrical outputs for a 115-volt alternating current and a 24-volt direct current.

8. Method according to one of the preceding claims, wherein the power supply unit is operated for the purpose of supplying power to electrical loads in the galley in step b).

## Revendications

1. Procédé d'alimentation électrique de secours dans un aéronef de ligne comprenant un réseau de bord et comprenant au moins un réseau local d'appareillages et un réseau électrique de secours, comprenant les étapes suivantes :
a) raccordement d'au moins une unité d'alimentation en énergie remplaçable sous la forme d'un conteneur à bagages ou d'un chariot de repas embarqué par le biais d'une interface d'arrimage (8) au réseau local d'appareillages ;
b) mise en service de l'unité d'alimentation en énergie ; et
c) au besoin, connexion de l'unité d'alimentation en énergie en cours d'utilisation au réseau électrique de secours.

2. Procédé selon la revendication 1, selon lequel des charges non indispensables sont mises hors circuit à l'étape c.

3. Procédé selon l'une des revendications précédentes, selon lequel, à l'étape c, l'unité d'alimentation en énergie est utilisée en étant interconnectée avec au moins une unité d'alimentation en énergie de ce type supplémentaire.

4. Procédé selon l'une des revendications précédentes, selon lequel l'unité d'alimentation en énergie comprend une pile à combustible, y compris toutes ses réserves de combustible et dispositifs d'exploitation.

5. Procédé selon l'une des revendications précédentes, selon lequel l'unité d'alimentation en énergie est équipée de réservoirs (3, 4) pour de l'hydrogène liquide et de l'oxygène liquide pour faire fonctionner la pile à combustible (2).

6. Procédé selon l'une des revendications précédentes, selon lequel l'unité d'alimentation en énergie est équipée d'un accumulateur (7) et d'une unité de régulation et de surveillance (6) ainsi que de composants techniques d'équipement (9) pour un fonctionnement autonome de sa pile à combustible (2).

7. Procédé selon l'une des revendications précédentes, selon lequel l'interface d'arrimage (8) comprend des sorties électriques pour une tension alternative de 115 volts et une tension continue de 24 volts.

8. Procédé selon l'une des revendications précédentes, selon lequel l'unité d'alimentation en énergie, à l'étape b, est mise en service pour l'alimentation des appareillages électriques dans la cuisine de bord.
